# FASCICULE DE BREVET EUROPEEN

(11) **EP 0 739 190 B1**
(45) Date de publication et mention de la délivrance du brevet: **02.09.1998**
(21) Numéro de dépôt: 95905685.4
(22) Date de dépôt: 29.12.1994
(51) Int. Cl.: A61C 7/06

(54) **DISPOSITIF DE FIXATION D'UN MODULE DE TRACTION ORTHODONTIQUE**
BEFESTIGUNGSVORRICHTUNG EINES ORTHODONTISCHEN TRAKTIONSMODULS
DEVICE FOR ATTACHING AN ORTHODONTIC TRACTION UNIT

(30) Priorité: 11.01.1994 FR 9400187
(43) Date de publication de la demande: 30.10.1996
(73) Titulaire: Aida International, F-93100 Montreuil (FR)
(72) Inventeur: ELKOUBY, Charles, Eric, F-75012 Paris (FR)
(74) Mandataire: Vander-Heym, Serge
(86) Numéro de dépôt international: FR9401551
(87) Numéro de publication internationale: WO9518578

(56) Documents cités:
- US-A- 4 392 825

## Description

La présente invention est relative à un dispositif de fixation d'un module de traction orthodontique.

En art dentaire, on est amené à exercer une force de traction sur une dent l'appareillage utilisé comporte deux parties : une partie endo buccale, ancrée sur la dent à redresser et une partie exo-buccale, ou module de traction, reliée à la première et permettant d'exercer une force sur la dent.

Le module de traction est relié par l'une de ses extrémités à la dent à redresser et est fixé au patient par son autre extrémité.

La partie fixée au patient est constituée par une pièce, en forme d'étrier, engagée par ses branches dans le corps du module. Si la force de traction dépasse une valeur prédéterminée, l'étrier peut s'échapper du corps du module. Un tel module est décrit dans la demande de brevet français déposée le 14 Juin 1993, au nom de la demanderesse et enregistrée sous le numéro 93 07360 (FR-A-2 706 282).

L'étrier est fixé, par sa partie médiane, sur un coussin de protection. Ce coussin peut constituer une bande de nuque ou une partie d'un serre-tête. Ce coussin a pour but d'éviter que le module de traction ne blesse le patient.

Comme le coussin, précité est réalisé en une matière textile rembourrée, la partie médiane de l'étrier est emprisonné dans une boucle en matière textile qui assure la fixation du module sur ledit coussin.

L'expérience a montré que le coussin de protection n'était pas totalement efficace compte tenu du fait que le module de traction , maintenu sur le coussin par l'une de ses extrémités seulement, était très libre, pouvait pivoter par cette extrémité et atteindre la peau du patient.

La solution consistant à augmenter la surface du coussin ne permet pas de remédier à ce problème. En effet, si on augmente les dimensions du coussin on augmente dans les mêmes proportions son prix de revient. Si, par ailleurs, on néglige le problème du prix de revient, la solution ci-dessus ne peut pas être mise en oeuvre de façon satisfaisante, car si le coussin présente des dimensions trops grandes celui-ci procure une gêne au patient.

La présente invention qui remédie à ces inconvénients est remarquable en ce que le coussin de protection présente des moyens permettant de limiter le pivotement du module de traction.

La présente invention sera mieux comprise par la description qui va suivre faite en se référant au dessin annexé à titre d'exemple indicatif, seulement, sur lequel :

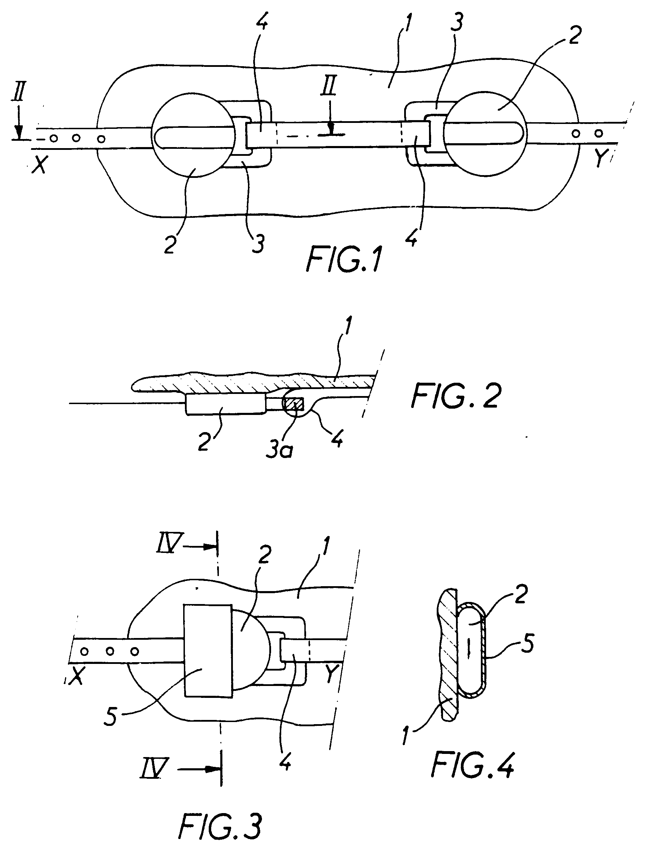

- la figure 1 montre un coussin usuel, utilisé comme bande de nuque, comportant ses deux modules de traction;
- la figure 2 est une vue en coupe effectuée selon la ligne II-II de la figure 1, le corps du module n'étant pas coupé;
- la figure 3 est une vue analogue à la figure 1 montrant la mise en oeuvre du dispositif de l'invention;
- la figure 4 est une vue en coupe effectuée selon la ligne IV-IV de la figure 3, le corps du module n'étant pas coupé.

En se reportant au dessin, on voit que 1 est un coussin, formant une bande de nuque, sur lequel sont fixés deux modules de traction, d'un type connu. Chaque module est constitué par l'association de deux parties 2 et 3.

La partie 2 forme le corps du module dans lequel est engagée la pièce 3 en forme d'étrier. Chaque module est fixé au coussin 1 à l'aide d'une bouche 4 emprisonnant la partie médiane 3a de l'étrier et réalisée à l'aide, par exemple, d'une bande de tissu cousue sur ledit coussin. Si la valeur de la traction auquel est soumis le module dépasse une valeur préderminée les deux pièces 2 et 3 se désolidarisent. Cette technique est bien connue.

Il ressort de la description ci-dessus que le module peut pivoter dans le plan du coussin et échapper à son action protectrice. Les effets nuisibles de ce déplacement sont augmentés lorsqu'on utilise des modules plus perfectionnés, tels que celui décrit dans la demande de brevet français précitée, car la longueur de ceux-ci est bien supérieure à celle du module représenté sur le dessin.

Selon l'invention, on remédie à cet inconvénient en prévoyant sur le coussin 1 un moyen pour limiter le pivotement du module.

Selon un mode de réalisation, le coussin 1 présente un pontet 5 sous lequel le module est engagé. Ce pontet est réalisé à partir d'une bande de tissu cousue par ses extrémités sur le coussin 1 et s'étendant transversalement à l'axe longitudinal de ce dernier matérialisé par la ligne XY.

Comme le pontet est réalisé en une matière souple, le module n'est pas fixé rigidement au coussin et il peut pivoter dans le plan du coussin sans toutefois échapper à ce dernier.

## Revendications

1. Dispositif de fixation d'un module de traction orthodontique selon lequel le module (2, 3) est fixé sur un coussin de protection (1) à l'aide d'une boucle souple (4) emprisonnant la partie médiane (3a) de l'étrier (3) du module caractérisé en ce que des moyens (5) sont prévus sur le coussin (1) pour limiter le pivotement du module (2, 3) dans le plan dudit coussin.

2. Dispositif selon la revendication 1, caractérisé en ce que le module est engagé sous un pontet (5) rendu solidaire du coussin (1).

3. Dispositif selon la revendication 2 caractérisé en ce que le pontet (5) est réalisé en une matière souple telle qu'une bande de textile.

## Claims

1. Device for fixing an orthodontic traction module in which the module (2,3) is secured to a protection cushion (1) with the aid of a flexible loop (4) confining the median portion (3a) of the clamp (3) of the module, characterised in that means (8) are provided on the cushion (1) so as to limit the pivoting of the module (2, 3) inside the plane of said cushion.

2. Device according to claim 1, characterised in that the module is engaged under a bridge (5) rendered integral with the cushion (1).

3. Device according to claim 2, characterised in that the bridge (5) is made of a flexible material, such as a fabric strip.

## Patentansprüche

1. Befestigungssystem für einen orthodontischen Zugmodul, nach dem der Modul (2,3) auf ein Schutzkissen mit einer flexiblen Spange (4) befestigt ist, die das Mittelteil (3a) des Bügels (3) des Moduls umschließt, dadurch gekennzeichnet, daß Vorrichtungen (5) auf dem Kissen (1) vorgesehen sind, um das Drehen des Moduls (2,3) in der Ebene des Kissens zu beschränken.

2. System nach Anspruch 1 dadurch gekennzeichnet, daß der Modul unter einer unlösbar gemachten Brücke (5) des Kissens (1) eingelegt ist.

3. System nach Anspruch 2 dadurch gekennzeichnet, daß die Brücke (5) aus einem flexiblen Werkstoff, wie z. B. einem Textilband, besteht.
